# EUROPEAN PATENT APPLICATION

(11) **EP 1 093 272 A2**
(43) Date of publication of application: **18.04.2001**
(21) Application number: 00308968.7
(22) Date of filing: 12.10.2000
(51) Int. Cl.: H04L 29/06, H04Q 7/38, G06F 1/00

(54) **Communication apparatus, communication methods, and recording media, and communication cards**

(30) Priority: 13.10.1999 JP 29049399
(71) Applicant: SONY CORPORATION, Tokyo 141 (JP)
(72) Inventor: Ukita, Yoshitaka, Shinagawa-ku, Tokyo (JP); Kakuda, Hiroshi, Shinagawa-ku, Tokyo (JP); Hattori, Masakazu, Shinagawa-ku, Tokyo (JP)
(74) Representative: Pilch, Adam John Michael

(57) **Abstract**

A communication apparatus which is loaded in a desired device (2) for use, comprises: data communication means (6) for storing predetermined authentication data and predetermined connection data and, operating under the control of the desired device (2), for executing data communication with a predetermined communication device in a wireless manner, by authentication on the basis of the predetermined authentication data. The predetermined connection data are data necessary for connection with a predetermined network.

## Description

The present invention relates generally to a communication apparatus, a communication method, a recording medium recording this communication method and a communication card recording this communication method, which may be applicable to a communication device used in a terminal device for listening to music data, for example.

Related-art mobile information terminal devices such as personal computers and PDA (Personal Digital Assistant) devices have a slot or slots for accommodating various card-shaped modules, thereby providing functional expansion without sacrificing portability.

One of these card modules for example is a modem card, which imparts communication functionality to personal computers which lack it.

On the other hand, as one of data communication means applicable to portable devices, the Bluetooth standard is proposed for supporting data communication between devices spaced relatively near by use of 2.4 GHz frequency band called a junk band on the basis of spread spectrum technology.

In the Bluetooth communication, an embodiment of module-type is also likely proposed which can be loaded in a slot of personal computers for example like a card modem. In the Bluetooth communication, data communication is made by performing authentication between devices, so that, with the module adapted to be loaded in a slot of personal computers, a user can communicate data only with the mobile telephone of his or her own.

Thus, if a user uses another user's personal computer for example, the Bluetooth communication allows the borrowing user to easily connect another user's personal computer to a network without imposing a burden to another user. Namely, the borrowing user can load his or her module having the Bluetooth communication capability into another user's personal computer and execute data transfer through the mobile telephone of the borrowing user corresponding to this module.

However, general connection processing requires a destination telephone number, a user name, a password, and so on, which are recorded, in the case of a personal computer, in its main body. Therefore, if the Bluetooth module is used as connected to an information terminal of another user, the borrowing user must input anew the above-mentioned pieces of information from the information terminal side, involving burdensome input operations.

It is therefore an aim of at least an embodiment of the present invention to simplify network connection operations through the Bluetooth communication standard, for example.

In carrying out the invention and according to one aspect thereof, there is provided a communication apparatus which is loaded in a desired device for use, comprising: data communication means for storing predetermined authentication data and predetermined connection data and, operating under the control of the desired device, for executing data communication with a predetermined communication device in a wireless manner, by authentication on the basis of the predetermined authentication data; wherein the predetermined connection data are data necessary for connection with a predetermined network.

In carrying out the invention and according to another aspect thereof, there is provided a communication method installed in a communication apparatus which is loaded in a desired device for use and a recording medium recording this communication method, the communication method comprising the steps of: operating under the control of the desired device and executing data communication with a predetermined communication device in a wireless manner, by authentication on the basis of stored authentication data; and connecting with a predetermined network through one of the desired device and the predetermined communication device on the basis of stored connection data to connect with a predetermined network for providing the data communication.

In carrying out the invention and according to still another aspect thereof, there is provided a communication card which is loaded in a desired device for use, comprising: data communication means for storing predetermined authentication data and predetermined connection data and, operating under the control of the desired device, for executing data communication with a predetermined communication device in a wireless manner, by authentication on the basis of the predetermined authentication data; wherein the predetermined connection data are data necessary for connection with a predetermined network.

In a preferred embodiment of the invention, when connecting to a network and the like through the Bluetooth communication for example, the network connection can be made by use of the stored line connection data. This makes it unnecessary to enter the telephone number and other information of the other party of the connection, thereby simplifying the connection operation.

By recording authentication data necessary for data communication between devices and data connection data necessary for network connection and at least providing functionality for enabling data communication between devices, the preferred embodiment of the present invention can simplify the operations involved in connection of devices to a network and so on through the Bluetooth standard for example.

The invention will now be described by way of example with reference to the accompanying drawings, throughout which like parts are referred to by like references, and in which:
FIG. 1 is a block diagram illustrating an information processing system practiced as one embodiment of the invention;
FIG. 2 is a plan view illustrating the information processing system shown in FIG. 1;
FIG. 3 is a timing chart for describing an operation of the information processing system shown in FIG. 1;
FIG. 4 is a schematic diagram illustrating a protocol stack at the time of connection through the Bluetooth communication;
FIG. 5 is a schematic diagram illustrating a protocol stack at the time of connection through telephone line;
FIG. 6 is a schematic diagram illustrating a protocol stack in a state of network connection;
FIG. 7 is a schematic diagram illustrating a protocol stack at the time of connection through the Bluetooth communication in an information processing system practiced as a second embodiment of the invention;
FIG. 8 is a schematic diagram illustrating a protocol stack at the time of connection through telephone line in an information processing system in the second embodiment; and
FIG. 9 is a diagram illustrating a protocol stack in a state of network connection in an information processing system in the second embodiment.

This invention will be described in further detail by way of example with reference to the accompanying drawings.

### (1) First embodiment:

### (1-1) Configuration of the first embodiment

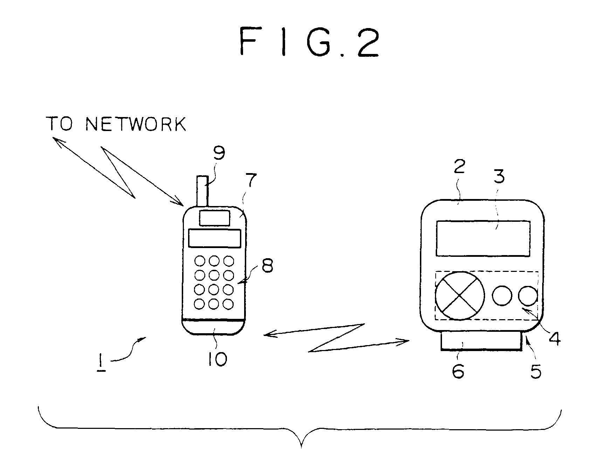

Now, referring to FIG. 2 there is shown a diagram illustrating a configuration of an information processing system practiced as one preferred embodiment of the present invention. In an information processing system 1, an application terminal 2 is adapted to download music data from a network service, holds the downloaded music data, and reproduce the music data for listening. Therefore, the application terminal 2 has a LCD (Liquid Crystal Display) panel 3, on which menus and other information necessary for the downloading and music reproduction are displayed. Under the LCD panel 3, operator controls 4 necessary for the downloading and reproduction are arranged.

The application terminal 2 is also arranged in the lower portion thereof with a slot 5 adapted to accommodate a module such as a modem card. In the information processing system 1, a predetermined communication card 6 is loaded in this slot 5 of the application terminal 2, thereby connecting the application terminal 2 to a desired network through a mobile telephone 7 on the basis of data communication between the communication card 6 and the mobile telephone 7.

The communication card 6 is a card-shaped communication module, which is loaded in the application terminal 2 to operate under the control of the application terminal 2. In addition to the capability of data communication with the mobile telephone 7 on the basis of the Bluetooth communication, the communication card 6 provides a capability of dialing a predetermined network by controlling the mobile telephone 7 and holds telephone numbers and authentication data necessary for network connection. This arrangement allows the application terminal 2 to make network connection with destinations set in the communication card 6 without asking the user to enter the telephone number, password, and other necessary information at the application terminal 2.

The mobile telephone 7 is arranged with operator controls 8 such as numeric keys and an antenna 9 and is adapted to make a call with a desired party by operating the operator controls 8 as with an ordinary mobile telephone. In addition, the mobile telephone 7 incorporates an antenna 10 for the Bluetooth communication in lower portion. By the Bluetooth communication executed via the incorporated antenna 10, data communication can be made with a desired device, transferring the data by this data communication with a desired network.

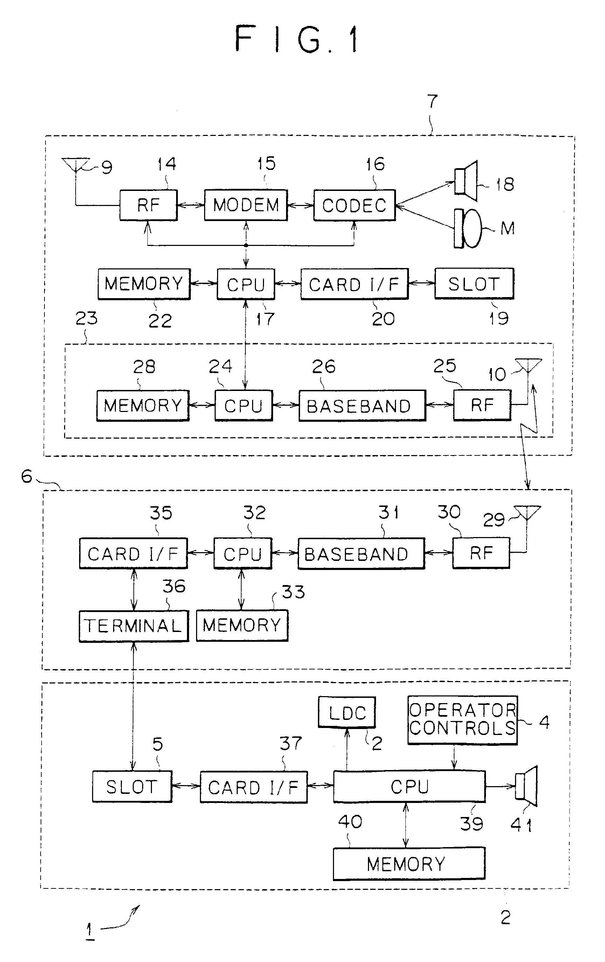

Referring to FIG. 1, there is shown a block diagram illustrating a configuration of the above-mentioned information processing system 1 including the mobile telephone 7. In the mobile telephone 7, an RF block 14 converts a modulated signal based on a predetermined frequency outputted from a modem 15 into a frequency compatible with a talking circuit (for example, 1.9 GHz or 800 MHz to 1.5 GHz) and outputs the resultant signal from the antenna 9. The RF block 14 also processes a signal received at the antenna 9 and supplies the resultant signal to the modem 15.

The modem 15 processes the signal received from the RF block 14, thereby demodulating the data necessary for line connection, audio data, and so on. The modem 15 also modulates audio data outputted from a CODEC 16 and various data outputted from a CPU (Central Processing Unit) 17 and supplies the modulated data to the RF block 14.

The CODEC 16 converts user's voice signal obtained through a microphone M into a digital signal to generate voice data, compresses it, and outputs the compressed voice data to the modem 15. Conversely, the CODEC 16 decompresses the voice data to demodulate by the CODEC 16, converts the decompressed voice data into analog data to generate a voice signal, and drives a speaker 18 by this voice signal. Consequently, the mobile telephone 7 can send the voice signal obtained through the microphone M to the other party connected and output a voice thereof from the speaker 18.

A slot 19 is formed on one side for example of the mobile telephone 7 so that a module such as a communication card may be inserted. A card interface (a card I/F) 20 transfers desired data between the loaded module and a CPU 17 under the control thereof. Consequently, the mobile telephone 7 can send data for example recorded on a loaded module of a card-shaped recording medium for example to the other party connected.

The CPU 17 executes a predetermined processing procedure in a work area allocated in a memory 22, thereby controlling the operation of the mobile telephone 7 in its entirety. To be more specific, the CPU 17, as with ordinary mobile telephones, controls the operations of the RF block 14, the modem 15, and the CODEC 16 in response to the operation made on the operator controls 8 and transfers predetermined data with the modem 15 to allocate a line with a user-specified talk destination and transfer voice signals therewith.

Further, the CPU 17 accesses the module loaded in the slot 19 through the card interface 20 and, in accordance with this module, executes processing such as line connection with a destination of talking identified by this module.

In the mobile telephone 7, when a CPU 24 arranged in a Bluetooth module 23 starts operation, the CPU 17 executes line connection for example in accordance with data outputted from the CPU 24, sends the data outputted from the CPU 24 to the other party connected or outputs data received therefrom to the CPU 24.

The Bluetooth module 23 supports the Bluetooth communication, transferring various data with the communication card 6 through the Bluetooth antenna 10 and outputting these data to the CPU 17. Consequently, the information processing system 1 can transfer various data with the communication card 6 through the Bluetooth communication and with a desired destination of talking.

To be more specific, in the Bluetooth module 23, an RF block 25 processes a signal received at the antenna 10 to demodulate the data supplied from the communication card 6 and outputs the demodulated data to a baseband block 26. The RF block 25 also modulates data outputted from the baseband module 26 and executes spread spectrum on the modulated data, outputting the resultant data from the antenna 10.

The baseband block 26 executes error correction on the data demodulated by the RF block 25 and outputs the resultant data to the CPU 24. At this moment, the baseband block 26 outputs a request to resend for example through the RF block 25 in response to the result of the error correction processing. Conversely, the baseband block 26 also adds an error correction code for example to the data outputted from the CPU 24 and outputs the resultant data to the RF block 25 in a predetermined data format.

The CPU 24 executes a predetermined processing procedure to be described later to allocate a line with the communication card 6, exchanges various data therewith, and transfers the exchanged data with the CPU 17.

The memory 28 constitutes a work area for use by the CPU 24 and holds a PIN (Personal Identification Number) code, which is authentication data necessary for the processing procedure to be executed by the CPU 24 and necessary for the Bluetooth communication.

In correspondence with the configuration of the Bluetooth module 23, the communication card 6 incorporates a Bluetooth antenna 29. An RF block 30 processes a signal received at this Bluetooth antenna 29 to demodulate data supplied from the Bluetooth module 23 and outputs the demodulated data to a baseband block 31. Conversely, the RF block 30 also modulates data supplied from the baseband block 31, executes spread spectrum on the modulated data, and outputs the resultant data from the Bluetooth antenna 29.

The baseband block 31 executes error correction on the data demodulated by the RF block 30 and outputs the resultant data to a CPU 32. At this moment, the baseband block 31 outputs a request to resend for example through the RF block 30 in accordance with the result of the error correction. Conversely, the baseband block 31 also adds an error correction code for example to the data outputted from the CPU 32 and sends the resultant data to the RF block 30 in a predetermined data format.

The CPU 32 executes a processing procedure to be described later to allocate a line with the Bluetooth module 23, exchanges various data with the Bluetooth module 23, and transfers the exchanged data with a card interface (a card I/F) 35.

The memory 33 constitutes a work area for use by the CPU 32 and holds a processing procedure necessary for execution of the processing by the CPU 32, a PIN code corresponding to the PIN code stored in the memory 28, a destination telephone number, a user name, and a password necessary for the connection to a network in the case where the communication card 6 is used.

A terminal 36 transfers data arranged in the communication card 6 and supplies power. When the communication card 6 is loaded in the slot 5, the communication card 6 is connected with the a card interface (a card I/F) 37 of the application terminal 2. The card interfaces 35 and 37 output the data supplied from the CPU 32 to a CPU 39 of the application terminal 2 through the terminal 36 and outputs the data supplied from the CPU 39 of the application terminal 2 to the CPU 32. In the application terminal 2, this data communication between the CPU 32 and the CPU 39 starts the operation of the communication card 6 to allocate the line with the Bluetooth module 23. Further, through the allocated line, the mobile telephone 7 is connected to an access point, thereby uploading and downloading various data to or from the connected destination of talking.

The CPU 39 controls the operation of the application terminal 2 in response to an operation made on the operator controls 4 and switches displays on the LCD display 2. Then, the CPU 39 downloads music data into a memory 40 through the card interface 37. The CPU 39 decompresses the downloaded data and converts the decompressed data from digital to analog to generate a music signal, thereby driving a earphone 41 with this music signal. Consequently, the user can listen to the music downloaded from any desired network on the basis of the data communication supported by the Bluetooth communication and the mobile telephone 7.

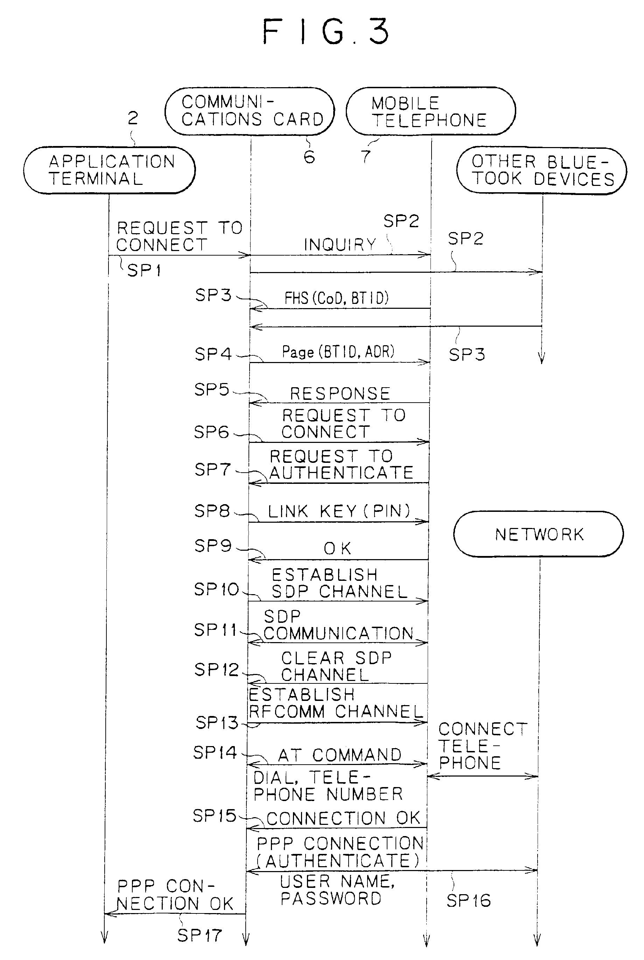

FIG. 3 is a timing chart indicative of procedures to be followed by the communication card 6 and the Bluetooth module 23 at starting of a sequence of the Bluetooth communication. To be specific, in the application terminal 2 of the information processing system 1, when the user specifies the downloading of music data from the operator controls 4, the CPU 39 outputs a request for connection to the CPU 32 of the communication card 6 in step SP1.

In response to this request for connection from the CPU 39, the CPU 32 drives the baseband block 31 to allocate the Bluetooth communication line with the mobile telephone 7. Namely, in step SP2, in response to this request for connection, the CPU 32 sends an inquiry to receive a response from a device compatible with the Bluetooth communication. With the device compatible with the Bluetooth communication, sends FHS (Frequency Hop Synchronization) including attribute information CoD (Class of Device) indicative of the type of the device and identification data BTID in the Bluetooth communication in response to this inquiry in step SP3. On the basis of this attribute information CoD, the CPU 32 detects the identification data BTID of the mobile telephone 7 in this example. On the basis of this inquiry, the CPU 24 of the Bluetooth module 23 starts operating in the mobile telephone 7, sending FHS.

Next, in step SP4, the CPU 32 assigns the detected mobile telephone identification data BTID and address data ADR for use in subsequent data exchange instead of this identification data BTID to generate a packet page and sends the generated packet page to the mobile telephone 7. On the basis of the packet page, the CPU 32 determines the mobile telephone 7 as the destination of communication. Further, in the subsequent data exchange, the mobile telephone 7 is identified by this address data ADR.

When the CPU 24 of the mobile telephone 7 receives the packet page, then the CPU 24 sends back a response to the communication card 6 in step SP5. When the CPU 32 receives this response, the CPU 32 sends a request for connection in step SP6.

When the CPU 24 of the mobile telephone 7 receives this request for connection, then the CPU 24 sends a request for authentication in step SP7. In response to this request, the CPU 32 generates, in step SP8, a link key in a predetermined format by use of a PIN code, which is authentication data, and sends the generated link key to the mobile telephone 7.

The mobile telephone 7 matches the authentication data given by the link key with the authentication data held in the memory 28. If a result of the matching indicates that the communication card 6 is a device authorized for communication, the mobile telephone 7 notifies the authentication result in step SP9 to execute subsequent processing.

On the basis of this authentication result, the CPU 32 establishes a SDP (Service Discovery Protocol) channel in step SP10.

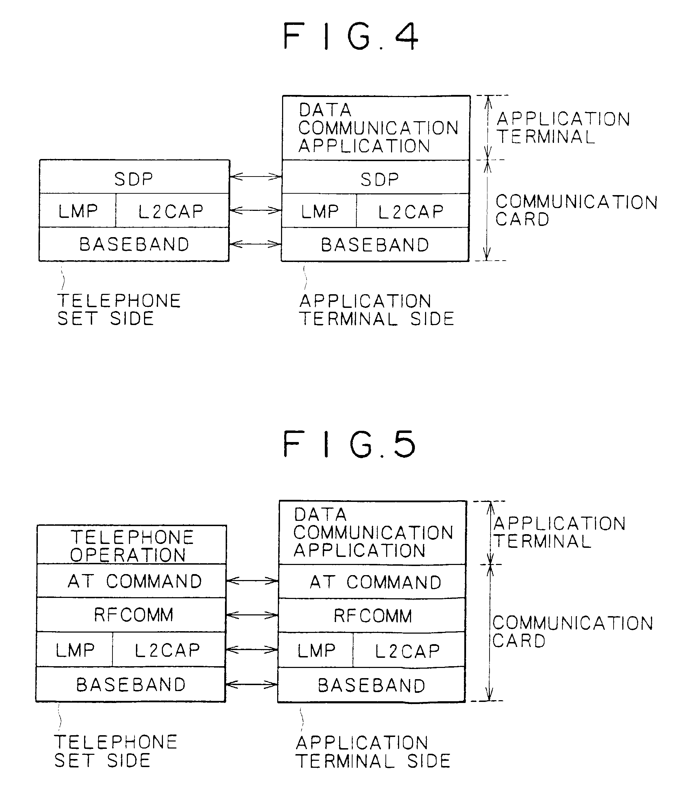

In establishing the connection by the Bluetooth communication as shown in FIG. 4, a physical link is established by the baseband blocks 26 and 31 and the RF blocks 25 and 30, on which a link by LMP (Link Management Protocol) and L2CAP (Logic Link Control) is established. LMP is a layer associated with the link control of the Bluetooth communication described in steps SP2 through SP9 and is used for checking line connection status for example. L2CAP is a layer for supporting the packet processing and multiplex processing, and so on in the Bluetooth communication and is used for dividing and reconfiguring the data to be transmitted.

At establishment of the connection in the Bluetooth communication, a link by SDP is established on the layer of LMP and L2CAP. With devices associated with the Bluetooth communication, which are connected to various other devices for use, various protocols are applied to various data transmission services. For example, different protocols are applied to the real-time transmission for the reproduction of audio/video data and the simple transfer of files of audio/video data. SDP is a layer for exchanging protocol information, which is the information about the services provided by Bluetooth devices. The CPU 32 establishes the channel of the information exchange by SDP in step SP10 and then exchanges the service information by the SDP communication in step SP11, then clearing this channel in step SP12. It should be noted that, when the communication card 6 is loaded in the application terminal 2, the CPU 32 gets this service information from the application terminal 2 to store the service information in the memory 33 and sends the stored information to the mobile telephone 7. In this example, CPU 32 sends the information about a protocol stack for downloading music data.

Consequently, the CPU 32 establishes the connection based on the Bluetooth communication with the mobile telephone 7 and then establishes a line with the network under the control of the mobile telephone 7.

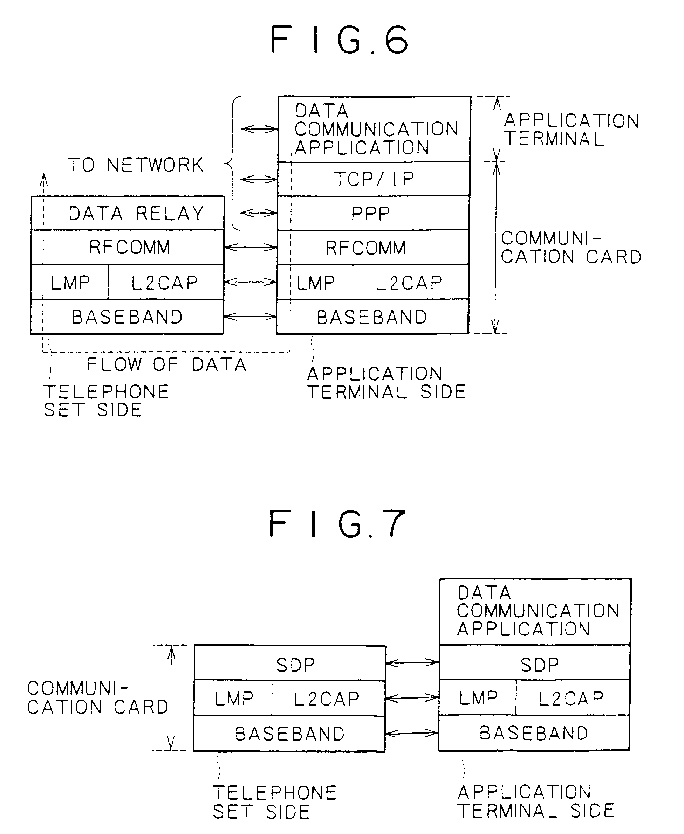

In establishing the line with the network, the CPU 32 establishes an RFCOMM (RF comm port) channel in step SP13. As shown in FIG. 5, under the control of the mobile telephone 7, a link by LMP and L2CAP is established on a physical link by base band. On the link by LMP and L2CAP, a link is established by RFCOMM. RFCOMM is a layer that constitutes a virtual serial port and provides interface for allocating the transfer of control commands (namely, AT commands) for controlling the operation of the mobile telephone 7, which is the upper layer.

Establishing the RFCOMM channel, the CPU 32 controls the operation of the mobile telephone 7 by the transfer of AT commands in step SP14, thereby connecting the line between the mobile telephone 7 and the network. At this moment, the CPU 32 connects to a predetermined access point by the telephone number stored in the memory 33.

When this connection in turn connects a line with a server for example, which is the destination of the network connection, the server sends information thereof to the mobile telephone 7, which accordingly supplies information indicative of completion of the connection in step SP15 to the CPU 32. In step SP16, the CPU 32 starts data communication with this server to establish PPP (Point-to-Point Protocol) connection. PPP is a protocol for the network connection made through a telephone line.

In the data communication with the network, a physical layer by baseband, a link by LMP and L2CAP, and a link by RFCOMM are sequentially established in the information processing system 1 as shown in FIG. 6. A layer by PPP is established on the RFCOMM link. Further, on the PPP layer, a layer of TCP/IP (Transport Control Protocol/Internet Protocol), which is a protocol for data exchange through network, is established. Through this TCP/IP, various data based on data communication applications are transferred.

In the PPP connection in step SP16, the CPU 32 controls the operation of the mobile telephone 7 so that, upon request from the server on the network side, the mobile telephone 7 sends the user name and password stored in the memory 33 to the other party of the connection. When the log-in onto the access point has been normally executed by the sending of these user name and password, the CPU 32, in response to the notification from the network, informs the CPU 39 of the application terminal 2 of the completion of PPP connection as shown in FIG. 7.

Consequently, the CPU 39 of the application terminal 2 becomes ready for data communication with the network and, by executing an application in response to the operation by the user on the operator controls, sends a request for downloading music data to the network as shown in the data flow indicated by dashed line as illustrated in FIG. 6, thereby downloading the requested music data from the network in the reverse direction.

### (1-2) Operation of first embodiment:

In the above-mentioned configuration, in the information processing system 1 (as shown in FIGS. 1 and 2), the user can carry application terminal 2 alone and operate the operator controls 4 by following instructions displayed on the LCD panel 3, upon which music data stored in the memory 40 are decompressed and converted from digital to analog to be outputted to the earphone 41 for listening.

If the user wants to listen to new music titles for example not stored in the memory 40, a communication module may be loaded in the slot 5 of the application terminal 2 to connect to a predetermined network, from which the music data for desired music titles provided by this network are downloaded into the memory 40.

In such a downloading operation, loading of the communication card 6 into the slot 5 allows the application terminal 2 to connect to the network through the mobile telephone 7 compatible with the communication card 6, thereby downloading music data through the communication card 6 and the mobile telephone 7. Therefore, if an application terminal is a property of another person for example, use of the own communication card 6 and the own mobile telephone 7 can download desired music data without costing the owner of the application terminal in terms of the downloading.

However, if this communication card is a module having only the Bluetooth communication capability, namely if this communication card has only a capability of establishing the Bluetooth communication with the mobile telephone 7 and transfers AT commands and so on, which control the mobile telephone 7, the network connection is made by dial-up under the control of the application terminal 2. This eventually costs the owner of the application terminal 2 in terms of the downloading. If connection to a network of the owner of the mobile telephone 7 is attempted to prevent the owner of the application terminal 2 from burdening downloading cost, it becomes necessary to newly enter such data necessary for the connection as telephone number and password.

The present embodiment, however, eliminates this necessity for entering the connection data by connecting the network with the data connection data stored in the communication card 6.

To be more specific, in the information processing system 1, data are exchanged by the authentication between the communication card 6 and the mobile telephone 7 to establish a line based on the Bluetooth communication (steps SP1 through SP12 of FIG. 3, and FIG. 4). Then, by the established line of the Bluetooth communication, control commands and so on for controlling the operation of the mobile telephone 7 are sent to the mobile telephone 7, upon which connection to the access point is made by the telephone number stored in the communication card 6 (steps SP14 and SP15 of FIG. 3, and FIG. 5) and then PPP connection is made to the network by the user name and password stored in the communication card 6.

At this moment, in the information processing system 1, the PPP connection with the network, which is protocol processing necessary for the data communication with the network, is executed by the communication card 6, by which the network connection can be made by a communication protocol compatible with the access point and the network. This simplifies various setting jobs necessary for starting the connection to networks.

At this moment, in the information processing system 1, because the PPP connection to this network is executed by the communication card 6, the connection to a network can be made by a communication protocol compatible with the access point and the network, thereby simplifying various setting jobs necessary for starting the connection to networks.

In addition, because the communication card 6 stores not only the telephone number but also the user name and password necessary for network connection, not only the simple access point connection but also automatic network login can be made, thereby enhancing ease of operation.

### (1-3) Effects of the first embodiment:

According to the above-mentioned configuration of the first embodiment, the authentication data necessary for data communication between devices and the data necessary for network connection are stored in a communication card and a capability of permitting the data communication between devices by at least these authentication data is arranged on the communication card. This eliminates the necessity for entering the telephone number of the other party of the connection when executing the network connection through the Bluetooth communication, thereby simplifying the network connection operation.

Further, at this moment, in addition to the telephone number of the other party, assignment of data necessary for network authentication to the data of the other party of the connection can eliminates the necessity for entering not only the telephone number but also the user name and so on.

Still further, at this moment, in addition to the data necessary for network connection, assignment of a capability of processing the protocol necessary for the data communication with the network to the communication card can eliminate the necessity for various setting operations associated with the other party of the connection.

Consequently, the information processing system 1 simplifies the operation for connecting, to networks, not only the application terminal 2 connected with the communication card 6 but also various other devices connected therewith.

### (2) Second embodiment:

The following describes an information processing system practiced as a second preferred embodiment of the invention with reference to FIG. 1. In the second embodiment, a communication card is loaded in not an application terminal but a mobile telephone.

The mobile telephone in the second embodiment is devoid of the Bluetooth module 23. Therefore, the Bluetooth communication with the application terminal is made by a communication card loaded in the slot 19. Besides, the application terminal is adapted to incorporate a Bluetooth module.

As shown in FIG. 7, as compared with FIG. 4, the Bluetooth module in the terminal side executes the processing of the communication card 6 described with reference to FIG. 3 by the user operation on the application terminal and the communication card executes the processing of the side of the mobile telephone 7 described above with reference to FIG. 3. In this arrangement, a PIN code issued by the application terminal is matched against the PIN code stored in the communication card for authentication processing and a communication protocol similar to that described with reference to FIG. 4 is constructed to allocate the connection by the Bluetooth communication.

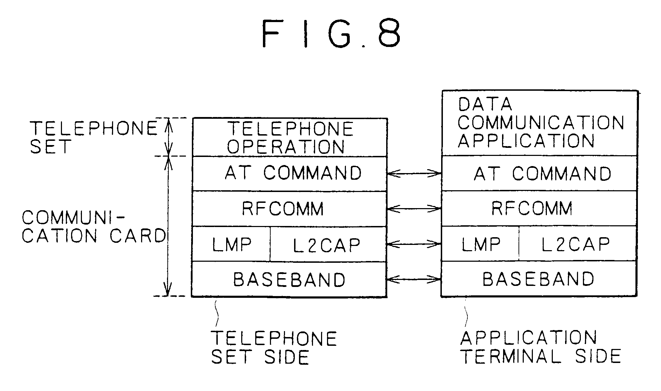

Further, as shown in FIG. 8, as compared with FIG. 5, the mobile telephone is controlled by the Bluetooth module of the application terminal to make access point connection. At this moment, under the control of the application terminal, the communication card makes a dial-up operation by use of the telephone number of the access point stored in the memory to establish a telephone line with that access point (refer to FIG. 3).

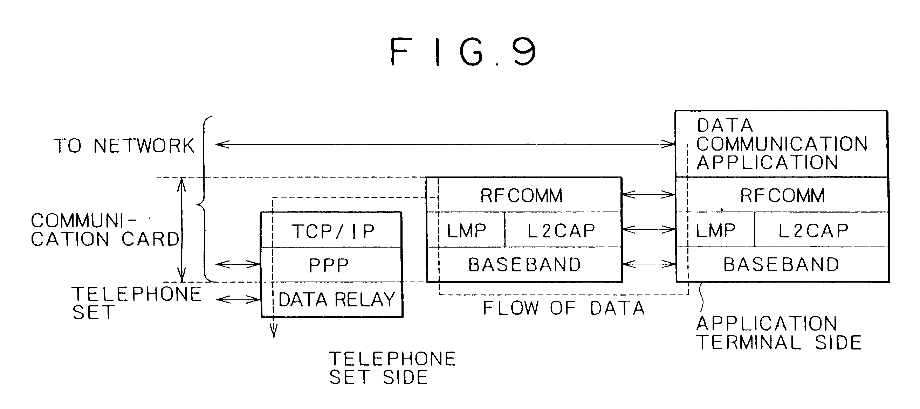

When the access point has been connected, then the network is connected by use of the user name and password stored in the communication card. As shown in FIG. 9, as compared with FIG. 6, the Bluetooth data obtained by RFCOMM are sent through the TCP/IP and PPP link layers arranged in the communication card.

The communication card detects the attribute of the device in which the communication card is loaded, by the data exchange with that device to be executed at the time of loading and, in accordance with the detected attribute, changes the protocol stack configurations as described above. Consequently, the communication card associated with the second embodiment is compatible with both the system configuration described above with reference to the first embodiment and the system configuration associated with the second embodiment. Like the communication card associated with the first embodiment, the communication card associated with the second embodiment detects the attribute of the device in which the communication card is loaded at the time of loading.

According to the second embodiment, in case where the communication card is loaded in a mobile telephone, authentication data and connection data are stored in the communication card and a capability of data communication between devices on the basis of at least the authentication data is provided in the communication card, thereby providing substantially the same effects as the first embodiment.

According to the second embodiment, the protocol stack configurations can be switched in accordance with a device in which the communication card is loaded, thereby providing the communication card that is applicable with flexibility to various systems.

### (3) Other embodiments:

In the first and second embodiments, the capability (AT commands in FIG. 5 and the TCP/IP and PPP layers in FIG. 6) of network connection by controlling the mobile telephone is disposed in the communication card. However, the present invention is not limited to this arrangement. Substantially the same effects as above can be obtained by another arrangement in which at least data necessary for connection are stored in the communication card and the network connection capability is disposed in the application terminal.

In the first and second embodiments, telephone number, user name, and password are stored in the communication card as the data necessary for connection. The present invention is not limited to this arrangement. For example, only telephone number may be stored in the communication card if connection is made to a network which does not require authentication.

In the first and second embodiments, a sequence of processing operations is executed by the CPU 32 in accordance with a processing procedure stored in the memory 33 and the data and so on necessary for connection are stored in the memory 33. The present invention is not limited to this arrangement. For example, these processing operations can also be executed on the basis of processing procedures and connection data provided by such storage media as CD-ROM.

In the first and second embodiments, the communication card is applied to a system for downloading music data. The present invention is not limited to this. The communication card is also applicable to systems for downloading and uploading various data.

In the first and second embodiments, the present invention is applied to a communication card based on the Bluetooth communication. The present invention is not limited to this arrangement. The present invention is also applicable to communication cards based on various other communication schemes.

In the first and second embodiments, the present invention is applied to card-shaped communication cards. The present invention is not limited to this. The present invention is also applicable to various communication apparatuses that can be loaded in target devices and operate under the control thereof.

As described and according to the present invention, a communication apparatus which is connected to a desired device for use stores authentication data necessary for data communication between devices and data necessary for network connection and has a capability of data communication between devices on the basis of at least the authentication data, thereby simplifying the operation necessary for network connection through the Bluetooth communication for example.

While the preferred embodiments of the present invention have been described using specific terms, such description is for illustrative purposes only, and it is to be understood that changes and variations may be made without departing from the scope of the appended claims.

## Claims

1. A communication apparatus which is loaded in a desired device for use, comprising:
data communication means for storing predetermined authentication data and predetermined connection data and, operating under the control of said desired device, for executing data communication with a predetermined communication device in a wireless manner, by authentication on the basis of said predetermined authentication data;
wherein said predetermined connection data are data necessary for connection with a predetermined network.

2. The communication apparatus according to claim 1, wherein said predetermined connection data have data for authentication for connection with said predetermined network.

3. The communication apparatus according to claim 1, wherein:
said predetermined communication device is a telephone device;
said desired device is a device for executing data communication with said predetermined network; and
said communication apparatus comprising:
control means for controlling said predetermined communication device by data communication on the basis of said data communication means to connect said predetermined network through said predetermined communication device; and
protocol processing means for processing a protocol necessary for data communication with said predetermined network.

4. The communication apparatus according to claim 1, wherein:
said predetermined communication device is a device for executing data communication with said predetermined network;
said desired device is a telephone device; and
said communication apparatus comprising:
protocol processing means for processing a protocol necessary for executing data communication with said predetermined network.

5. The communication apparatus according to claim 1, wherein configurations of protocol stacks are switched between in accordance with said desired device.

6. The communication apparatus according to claim 1, wherein said predetermined connection data have data for identifying an object to be connected in connection with said predetermined network.

7. The communication apparatus according to claim 1, further comprising:
attribute detecting means for detecting an attribute of said desired device by connection therewith.

8. A communication method installed in a desired device for use, comprising the steps of:
operating under the control of said desired device and executing data communication with a predetermined communication device by authentication on the basis of stored authentication data in a wireless manner; and
connecting with a predetermined network through one of said desired device and said predetermined communication device on the basis of stored connection data for providing data for said data communication.

9. The communication method according to claim 8, wherein said stored connection data are at least data for authentication in the connection with said predetermined network.

10. The communication method according to claim 8, wherein:
said predetermined communication device is a telephone device; and
said communication method comprising the steps of:
controlling said predetermined communication device by data exchange with said predetermined communication device under the control of said desired device to connect with said predetermined network; and
processing a protocol necessary for data communication with said predetermined network.

11. The communication method according to claim 8, wherein:
said desired device is a telephone device; and
said communication method comprising the step of:
processing a protocol necessary for data communication with said predetermined network.

12. The communication method according to claim 8, further comprising the step of:
switching between configurations of protocol stacks in accordance with said desired device.

13. The communication method according to claim 8, wherein said connection data have data for identifying an object to be connected in connection with said predetermined network.

14. The communication method according to claim 8, further comprising the step of:
detecting an attribute of said desired device by connection with said desired device.

15. A recording medium recording a communication method for a communication apparatus which is loaded in a desired device for use, said communication method comprising the steps of:
operating under the control of said desired device and executing data communication with a predetermined communication device by authentication on the basis of stored authentication data; and
connecting with a predetermined network through one of said desired device and said predetermined communication device on the basis of stored connection data for providing data for said data communication.

16. The recording medium according to claim 15, wherein said stored connection data are at least data for authentication in the connection with said predetermined network.

17. The recording medium according to claim 15, wherein:
said predetermined communication device is a telephone device; and
said communication method comprising the steps of:
controlling said predetermined communication device by data exchange with said predetermined communication device under the control of said desired device to connect with said predetermined network; and
processing a protocol necessary for data communication with said predetermined network.

18. The recording medium according to claim 15, wherein:
said desired device is a telephone device; and
said communication method comprising the step of:
processing a protocol necessary for data communication with said predetermined network.

19. The recording medium according to claim 15, wherein said communication method further comprising the step of:
switching between configurations of protocol stacks in accordance with said desired device.

20. The recording medium according to claim 15, wherein said connection data have data for identifying an object to be connected in connection with said predetermined network.

21. The recording medium according to claim 15, wherein said communication method further comprising the step of:
detecting an attribute of said desired device by connection with said desired device.

22. A communication card which is loaded in a desired device for use, comprising:
data communication means for storing predetermined authentication data and predetermined connection data and, operating under the control of said desired device, for executing data communication with a predetermined communication device in a wireless manner, by authentication on the basis of said predetermined authentication data;
wherein said predetermined connection data are data necessary for connection with a predetermined network.

23. The communication card according to claim 22, wherein said predetermined connection data have data for authentication for connection with said predetermined network.

24. The communication card according to claim 22, wherein:
said predetermined communication device is a telephone device;
said desired device is a device for executing data communication with said predetermined network; and
said communication card comprising:
control means for controlling said predetermined communication device by data communication on the basis of said data communication means to connect said predetermined network through said predetermined communication device; and
protocol processing means for processing a protocol necessary for data communication with said predetermined network.

25. The communication card according to claim 22, wherein:
said predetermined communication device is a device for executing data communication with said predetermined network;
said desired device is a telephone device; and
said communication card comprising:
protocol processing means for processing a protocol necessary for executing data communication with said predetermined network.

26. The communication card according to claim 22, wherein configurations of protocol stacks are switched therebetween in accordance with said desired device.

27. The communication card according to claim 22, wherein said predetermined connection data have data for identifying an object to be connected in connection with said predetermined network.

28. The communication card according to claim 22, further comprising:
attribute detecting means for detecting an attribute of said desired device by connection therewith.
